# EUROPEAN PATENT SPECIFICATION

(11) **EP 1 657 864 B1**
(45) Date of publication and mention of the grant of the patent: **09.09.2015**
(21) Application number: 05300856.1
(22) Date of filing: 25.10.2005
(51) Int. Cl.: H04L 12/801, H04L 12/24

(54) **Communication traffic control rule generation methods and systems**
Regelerzeugungsgerät und Verfahren zur Verkehrssteuerung für Datenkommunikation
Procédé et dispositif pour générer des règles de contrôle du traffic des communications

(30) Priority: 12.11.2004 US 988289
(43) Date of publication of application: 17.05.2006
(73) Proprietor: ALCATEL LUCENT, 92100 Boulogne-Billancourt (FR)
(72) Inventor: Watkinson, David, Kanata, Ontario K2K 3L6 (CA); Chung Kam Chung, Georges, Ottawa, Ontario K2J 4V6 (CA); Buchko, Steven William, Dunrobin, Ontario KOA 1TO (CA)
(74) Representative: Wetzel, Emmanuelle

(56) References cited:
- EP-A- 1 336 915
- US-A- 5 878 231

## Description

### Field of the Invention

This invention relates generally to communication equipment and, in particular, to generating communication traffic control rules for communication equipment.

### Background

Access Control Lists (ACLs) are widely used in communication equipment to filter Internet Protocol (IP) traffic. ACLs include a list of rules which are applied to packets based on fields in the packet header such as source address, destination address, protocol ID, port ID, etc. ACLs are typically applied in a data path at line cards which provide an interface between communication equipment and a communication medium, and can be implemented either in hardware, for relatively simple rules, or software, for more complex rules. ACLs can also be applied at a control card for traffic that terminates on the communication equipment.

For communication equipment such as routers in a communication network, various configuration settings may also be established. Configuration settings may be used, for example, to enable or disable processing of particular types of communication traffic. Although configuration settings may thereby be used to control communication traffic, configuration settings are normally applied at higher architecture levels than ACLs. Thus, communication traffic which corresponds to a particular protocol which has not been enabled in configuration settings may be admitted into communication equipment and discarded only after further processing. ACLs are therefore often provided in addition to configuration settings to effectively block communication traffic before it is processed by higher-level communication equipment components.

According to conventional techniques, both configuration settings and ACLs are manually established or provisioned, using a command line interface (CLI) for instance. As those skilled in the art will appreciate, manual data entry is time consuming, prone to error, and often results in discrepancies between configuration settings and ACLs. For example, an operator of communication equipment might forget to establish an ACL for some configuration settings or make incorrect entries to block communication traffic for a protocol which has been enabled in configuration settings for the same communication equipment.

ACL provisioning is simplified to some extent by one known ACL solution which provides a predetermined type of ACL. However, the predetermined ACL is very basic, and provides for only complete blocking or allowing of communication traffic based on source address. More complex ACL functions such as rate limiting are not supported. The predetermined ACL also lacks the granularity to permit only certain protocols on a port.

Another known ACL product provides templates to aid in the creation of ACLs and supports ACL management functions. Although the templates may facilitate ACL creation by a user, user inputs are required to create ACLs. Similarly, the ACL management functions may provide some time savings in deployment of ACLs, but do not actually generate the ACLs.

U.S. Patent No. 5,878,231 discloses data packet filtering at a computer network interface. A screening system filters received packets and actions are taken depending upon the filtering. Such a screening system, however, does not appear to address issues such as those noted above with respect to conventional communication traffic filtering or control.

### Summary of the Invention

In view of the foregoing, methods and systems for automatically generating custom ACLs may be desirable. The custom ACLs may be specific to the configuration of a particular piece of communication equipment, for example, and automatically generated from existing configuration information.

According to one broad aspect of the invention, there is provided a machine-implemented method of generating a communication traffic control rule for communication equipment. The method includes accessing configuration information for communication equipment, determining from the configuration information a parameter which affects processing of communication traffic by the communication equipment, building, based on the parameter, a communication traffic control rule to be applied to communication traffic at the communication equipment, and applying the communication traffic control rule at interfaces of the communication equipment to communication traffic being terminated by the communication equipment.

The operation of determining may involve parsing a configuration file. In some embodiments, multiple parameters which affect processing of communication traffic by the communication equipment are determined. Building may then include building multiple communication traffic control rules, with each communication traffic control rule being based on at least one of the determined parameters.

Additional communication traffic control parameters may be determined from default information stored for the communication equipment and used to building the communication traffic control rules. Generated communication traffic control rules may be updated or replaced when changes in the configuration information are detected.

A system for generating a communication traffic control rule for communication equipment is also provided, and includes a parameter determination module and a rule builder, either or both of which may be implemented in a processor. The parameter determination module is configured to access configuration information for communication equipment and to determine from the configuration information a parameter which affects processing of communication traffic by the communication equipment, and the rule builder configured to build, based on the parameter, a communication traffic control rule to be applied to communication traffic at the communication equipment.

Further functions may also be performed by the parameter determination module, the rule builder, or other components in conjunction with which the system operates.

In accordance with another aspect of the invention, a machine-implemented method of generating a communication traffic control rule for communication equipment includes accessing default information stored for communication equipment, determining a default communication traffic control parameter from the stored default information, and building, based on the default parameter, a communication traffic control rule to be applied to communication traffic at the communication equipment.

A related system for generating a communication traffic control rule for communication equipment is also provided. A parameter determination module is configured to access default information stored for communication equipment and to determine a default communication traffic control parameter from the stored default information, and a rule builder is configured to build, based on the default parameter, a communication traffic control rule to be applied to communication traffic at the communication equipment.

Other aspects and features of embodiments of the present invention will become apparent to those ordinarily skilled in the art upon review of the following description of specific illustrative embodiments of the invention.

### Brief Description of the Drawings

Examples of embodiments of the invention will now be described in greater detail with reference to the accompanying drawings, in which:
Fig. 1 is a flow diagram illustrating a method according to an embodiment of the invention;
Fig. 2 is a block diagram of a system according to an embodiment of the invention;
Fig. 3 is a block diagram of communication equipment in which embodiments of the invention may be implemented; and
Fig. 4 is a block diagram of a communication system including communication equipment in which embodiments of the invention may be implemented.

### Detailed Description of Preferred Embodiments

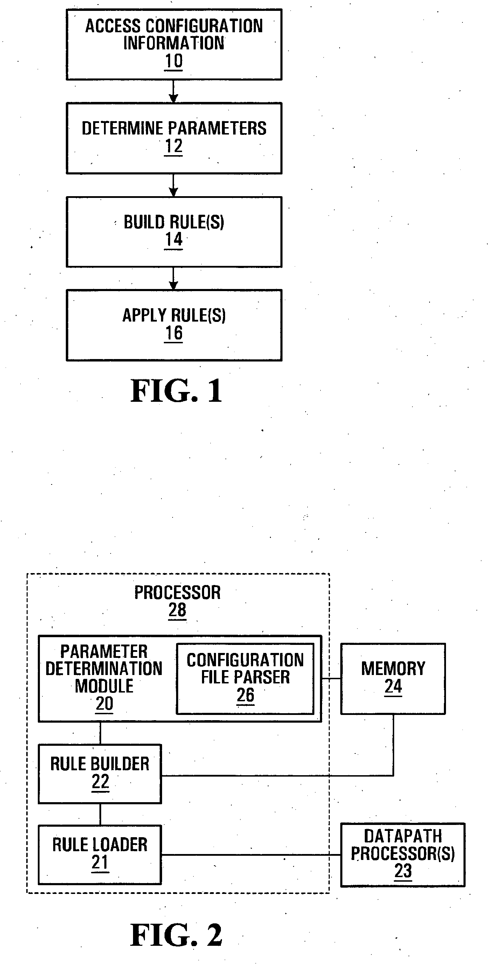

Fig. 1 is a flow diagram illustrating a method according to an embodiment of the invention for automatically creating communication traffic control rules, illustratively ACLs, from configuration information associated with communication equipment. In a preferred embodiment, the method is machine-implemented, such that ACLs are automatically generated without requiring manual inputs from a user.

The method begins at 10 with an operation of accessing configuration information for the communication equipment. From the configuration information, one or more parameters which affect processing of communication traffic by the communication equipment are determined at 12. At 14, one or more communication traffic control rules are built based on the parameter or parameters determined at 12.

As will be apparent to those skilled in the art, any communication traffic control rules which are built at 14 establish conditions which control communication traffic at the communication equipment. ACLs, for example, control access to the communication equipment by communication traffic. The rule or rules which are built at 14 are preferably automatically applied at 16 to interfaces and to control traffic terminated at the communication equipment.

The operation of accessing configuration information at 10 may include accessing information stored in a local memory of the communication equipment, information stored at a remote location, or both. Although remote configuration information storage is contemplated, configuration information for communication equipment is typically stored in a local memory device at the communication equipment, in a configuration file for instance.

In the case of a configuration file, the operation of determining at 12 may include parsing the configuration file to detect, for example, protocols and functions that are enabled on the communication equipment. Some common protocols which may be enabled, or alternatively disabled, in a configuration file for communication equipment such as a router include Border Gateway Protocol (BGP), Open Shortest Path First (OSPF), and IP Group Management Protocol (IGMP).

The above list of example protocols is in no way intended to be exhaustive, and other protocols and functions which may be enabled or disabled at communication equipment will be apparent to those skilled in the art. In addition, other types of parameters than protocols and functions may also be specified in configuration information, such as addresses of communication traffic sources for which communication traffic is to be blocked or passed.

The determining operation at 12 may involve configuration file or information parsing, as described above, to detect parameters which are specified in configuration information. For example, enabled protocols may be detected by parsing a configuration file. However, it should be appreciated that configuration information may be further processed at 12 during the determination of parameters for communication traffic control. Address resolution represents one example of such further processing, although other types of processing may also be apparent.

Protocols, functions, and addresses, or more specifically whether the protocols and functions are enabled or disabled and whether communication traffic from the addresses is to be blocked or passed at communication equipment, are thus examples of parameters which affect processing of communication traffic by communication equipment. If BGP has not been enabled for communication equipment for instance, then the equipment will not be capable of properly processing BGP communication traffic. In this situation, it may be desirable to apply an ACL to block BGP traffic from entering the communication equipment for processing.

In some embodiments, communication traffic control parameters are determined at 12 from stored default information other than configuration information. As described above with reference to the configuration information, this default information may be stored locally at communication equipment or at a remote location. The operation at 14 may then involve building communication traffic control rules based on parameters determined from configuration information, default parameters determined default information, or a combination of both types of parameters. Thus, in some embodiments, the accessing operation at 10 may also, or instead, involve accessing stored default communication traffic control information for the communication equipment.

Many different types of default information are contemplated. For example, an owner or operator of the communication equipment or a provider of service which is supported by the communication equipment may wish to have certain parameters applied to communication traffic at the communication equipment. In some cases, these parameters may be of a type which is suitable for inclusion in or implementation using ACLs but cannot be specified in configuration information. Default information in the form of a service provider profile, for instance, including the default parameters or information from which these parameters can be determined, may be stored in a local or remote store for the communication equipment. As for configuration information, the determination of parameters from default information may involve parsing the default information and/or possibly further processing the default information to determine default parameters. Communication traffic control rules are then built based on the default parameters.

Rate limiting is one example of a parameter which might be implemented in ACLs but not specified in configuration information. Other examples include commonly used protocols such as IGMP which are often to be enabled by default, service-specific parameters or information intended to control communication traffic associated with a particular service to thereby provide increased granularity for communication traffic control by a provider of multiple services or for communication equipment which supports multiple services, equipment-specific parameters, and parameters associated with a communication traffic control rule template.

Service- or provider-specific parameters might include rate limiting for communication traffic control rules which are to be applied at certain locations within communication equipment, at control interfaces for instance. Equipment-specific default information or parameters may relate to characteristics or capabilities which vary between different types of communication equipment. A certain model of router, for example, might only use ACLs at physical interfaces. Communication traffic control rule templates may be used in the building function at 14 for customization according to determined configuration or default parameters instead of generating each communication traffic control rule from scratch.

It should be appreciated, however, that embodiments of the invention are in no way dependent upon or limited to these or any other particular parameters.

A communication control rule which is built at 14 may be an ACL which includes, for example, instructions to permit access and optionally rate limit the access for protocols and functions enabled for communication equipment. For address-based communication traffic control rules, source addresses or possibly address ranges determined at 12 are used in the permit and rate limiting instructions. An ACL generated in this manner may instead include instructions for denying access. Thus, more generally, a communication traffic control rule may be a blocking rule to block communication traffic, a permissive rule to permit or pass communication traffic, and a rate limiting rule to permit or pass communication traffic up to a predetermined rate. In the case of a rate limiting rule, once a predetermined rate is reached or exceeded, communication traffic is blocked, preferably temporarily.

The present invention is in no way limited to the particular operations shown in Fig. 1. Embodiments of the invention may be implemented with fewer or further operations, possibly performed in a different order, than explicitly shown in Fig. 1.

For example, communication traffic control rules may be automatically kept up to date by detecting changes in configuration information and
repeating the operations of determining and building for configuration information affected by the detected change. Communication traffic control rules may be modified or replaced with new rules which are built on the basis of any configuration information which has been changed. The entire method of Fig. 1 may instead be repeated when a change in configuration information is detected. In this case, an entire new set of communication traffic control rules may be generated.

Communication traffic control rules which were generated on the basis of default parameters may be updated in a similar manner by replacement or modification when a change in configuration information is detected.

The foregoing description relates to methods for generating communication traffic control rules, illustratively ACLs, based on configuration information, default information, or both. Fig. 2 is a block diagram of a system according to an embodiment of the invention.

The system of Fig. 2 includes a parameter determination module 20 and a rule builder 22 which are connected to each other and to a memory 24. The rule builder 22 is also connected to a rule downloader 21 which sends generated rules to one or more datapath processors 23.

The parameter determination module 20, the rule builder 22, and the rule loader 21 may be implemented as separate hardware components configured to provide the functions disclosed herein, or using a processor 28 as shown in Fig. 2. The processor 28 may be a dedicated microprocessor, microcontroller, or Application Specific Integrated Circuit (ASIC), for example, which executes software stored in the memory 24 to perform parameter determination and rule building functions. In many implementations, however, the processor 28 may also perform other functions, including operating system functions, and communication functions, for instance, under the control of additional software stored in the memory 24 or another memory.

The memory 24 represents one or more memory devices which may include solid state memory devices, disk drives, and/or other types of memory device adapted for operation with fixed or removable storage media. Configuration information and default information, and possibly software for execution by the processor 28, are stored in the memory 24, preferably in at least distinct files or memory locations or areas and possibly in different memory devices. As described above, configuration information and/or default information may be stored locally or remotely, and accordingly the memory 24 may or may not be co-located with other components of the system of Fig. 2.

Communication equipment may include one or more datapath processors 23 by which generated traffic control rules are applied. In some embodiments, as shown in Fig. 2, the processor 28 is separate from any datapath processor(s) 23, although integrated implementations in which various processor-based components are implemented using the same processor are also contemplated.

In operation, the parameter determination module 20 accesses configuration information, default information, or both, in the memory 24 and determines one or more parameters to be used in building communication traffic control rules for a particular piece of communication equipment. Where configuration information is stored in a configuration file, the parameter determination module 20 may incorporate a configuration file parser 26. Although not explicitly shown in Fig. 2, a default information parser for parsing default information or a general purpose parser which is capable of parsing configuration information and default information may also or instead be provided.

Parameters which have been determined by the parameter determination module 20 may be either stored in the memory 24 for subsequent access by the rule builder 22 or passed to the rule builder 22 directly. The rule builder 22 then builds one or more communication traffic control rules based on the parameters.

Implementation of the actual rules may be handled in several ways. In the embodiment shown in Fig. 2, the generated traffic control rules are passed to the rule loader 21 by the rule builder 22. The rule loader 21 then provides the traffic control rules to the datapath processor(s) 23, by which the traffic control rules are applied to communication traffic. According to another embodiment, traffic control rule implementation is handled by the rule builder 22 or a further component of the communication equipment in which or in conjunction with which the system of Fig. 2 operates. For example, the rule builder 22 may store any generated communication traffic control rules in the memory 24 for subsequent access by another component. The rule builder 22 itself may instead configure components of communication equipment, such as the datapath processor(s) 23 to apply generated communication traffic control rules. A combined approach is also contemplated, in which the rule builder 22 handles implementation of certain types of communication traffic control rule whereas other types of communication traffic control rule are handled by further components.

The parameter determination module 20 and the rule builder 22 may perform additional functions, illustratively configuration information change detection and communication traffic control rule updating for instance, which will be apparent from the foregoing description of Fig. 1.

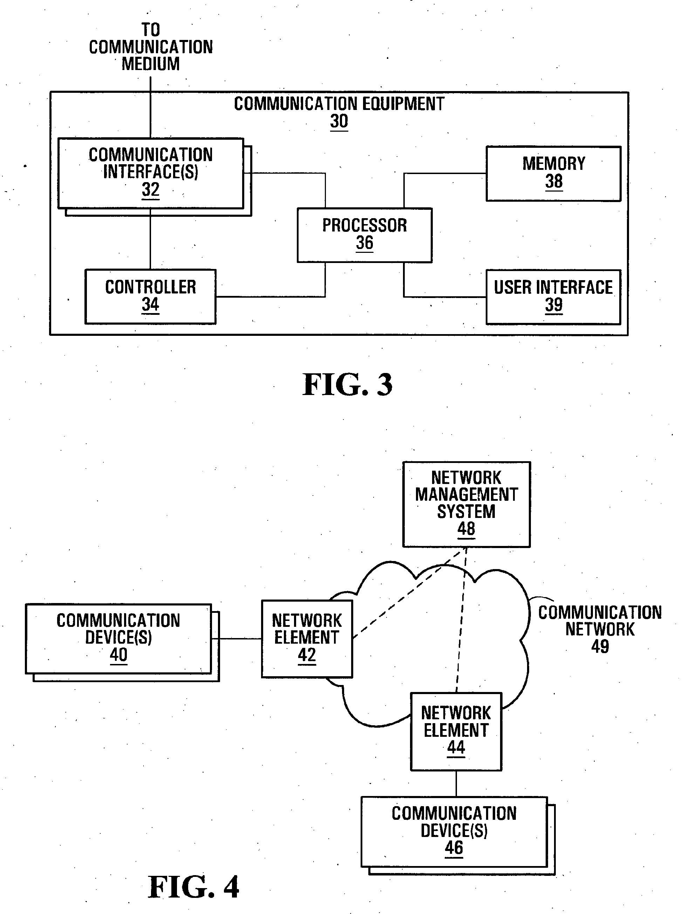

Fig. 3 is a block diagram of communication equipment in which embodiments of the invention may be implemented. The communication equipment 30 includes a processor 36 which is connected to a controller 34, one or more communication interfaces 32, a memory 38, and a user interface 39. Each communication interface 32 is also connected to the controller 34.

Communication equipment may include further, fewer, or different components with different interconnections than shown in Fig. 3, which is intended solely for illustrative purposes.

A physical interface to a communication medium is represented by the communication interfaces 32, which may be line cards for instance. Physical interfaces to different types of communication media or components may also be provided, as line cards and adapter cards, for example. Basic functions and operations of these interfaces are often controlled by a controller 34, illustratively a control card.

The processor 36 and the memory 38 are preferably used to implement the communication control traffic functions as described in detail above. The processor 36 may be dedicated to communication control rule generation, or be configured to perform other control functions or possibly communication traffic processing functions.

The user interface 39 represents one or more devices which receive inputs from and possibly also provide outputs to a user or operator of the communication equipment 30. The user interface 39 may include such devices as a keyboard, a mouse, and a display, for example. Other types of interface, illustratively a transceiver, may also or instead be used to support user interaction with the communication equipment 30 from a remote location, through a network management system (NMS) for instance. Changes to configuration information, which may be detected in accordance with embodiments of the invention, may be entered by a user through the user interface 39.

Although all of the components in Fig. 3 are shown as being implemented within the communication equipment 30, it should be appreciated that communication traffic control generation may instead be provided as an external tool in a operator terminal or NMS, for example, to be used in conjunction with communication equipment. Communication traffic control rule generation functions may thus be supported externally of communication equipment at which generated communication traffic control rules are to be applied.

Many different forms of communication equipment will be apparent to those skilled in the art. In a switch or router, for example, line cards may provide an interface between a communication medium and switching fabric which may be controlled by the controller 34. Routing of received communication traffic through the communication medium is generally accomplished by switching the traffic between line cards, whereas ingress and egress operations, to insert communication traffic onto or to remove communication traffic from the communication medium, involve switching communication traffic between adapter cards or other components and line cards. Particular operations performed by other types of communication equipment will be apparent to those skilled in the art.

In accordance with an aspect of the invention, the processor 36 generates communication traffic control rules to be applied at the communication equipment 30. The generated communication traffic control rules may be applied at any of the interfaces 32, for example, to control the communication traffic which is allowed to pass between the communication equipment 30 and the communication medium. Communication traffic control rules may also or instead be applied at interfaces to the controller 34 or other components of the communication equipment 30 to control communication traffic in a similar manner.

The processor 36 may thus be configured to build different types of communication traffic control rule to be applied at different interfaces. For example, the processor 36 may build any of so-called per-interface ACLs to protect physical interfaces and control loopback ACLs to protect the controller 34.

Other types of communication control rules are also contemplated. The communication equipment 30 may support the grouping of multiple interfaces 32 into a secure group, illustratively a Virtual Private Network (VPN). A VPN loopback ACL, which is applied at all of the physical interfaces in a VPN, is therefore a further example of a type of communication traffic control rule which may be generated according to embodiments of the present invention.

Fig. 4 is a block diagram of a communication system including communication equipment, and provides an overview of one possible operating environment in which embodiments of the invention may be implemented.

The communication system of Fig. 4 includes communication devices 40, 46 connected to network elements 42, 44 of a communication network 49. The network elements 42, 44 are configurable and controllable from a network management system (NMS) 48. It will be apparent that a communication system may include many more communication devices, network elements, and NMSs than shown in Fig. 4.

Those skilled in the art will be familiar with the particular structure and operation of various communication systems of the general type shown in Fig. 4. Communication between the communication devices 40, 46 through the communication network 49 is enabled by the network elements 42, 44, which may include the components shown in Fig. 3 and described above. The network elements 42, 44 may be routers, illustratively data packet routers, for example.

Using the NMS 48 or another local or remote operator terminal or computer system (not shown), the network elements 42, 44 may be configured by a service provider, owner, or operator. Communication traffic control rule generation may also be implemented locally at the network elements 42, 44 or remotely at other systems or devices. Communication traffic control rule generation may also involve cooperation between multiple systems or devices, such as in the case where a remote communication traffic control generation tool accesses configuration information or default information which is stored locally at the network elements 42, 44.

Various embodiments of the invention have been described in detail above. In order to further illustrate an aspect of the invention, the following example of a configuration file and ACLs which may be generated therefrom is provided. Of course, different configuration information may result in different ACLs, and the present invention is not limited to the following or any other particular type or format of configuration information or ACLs.

From the following configuration information: 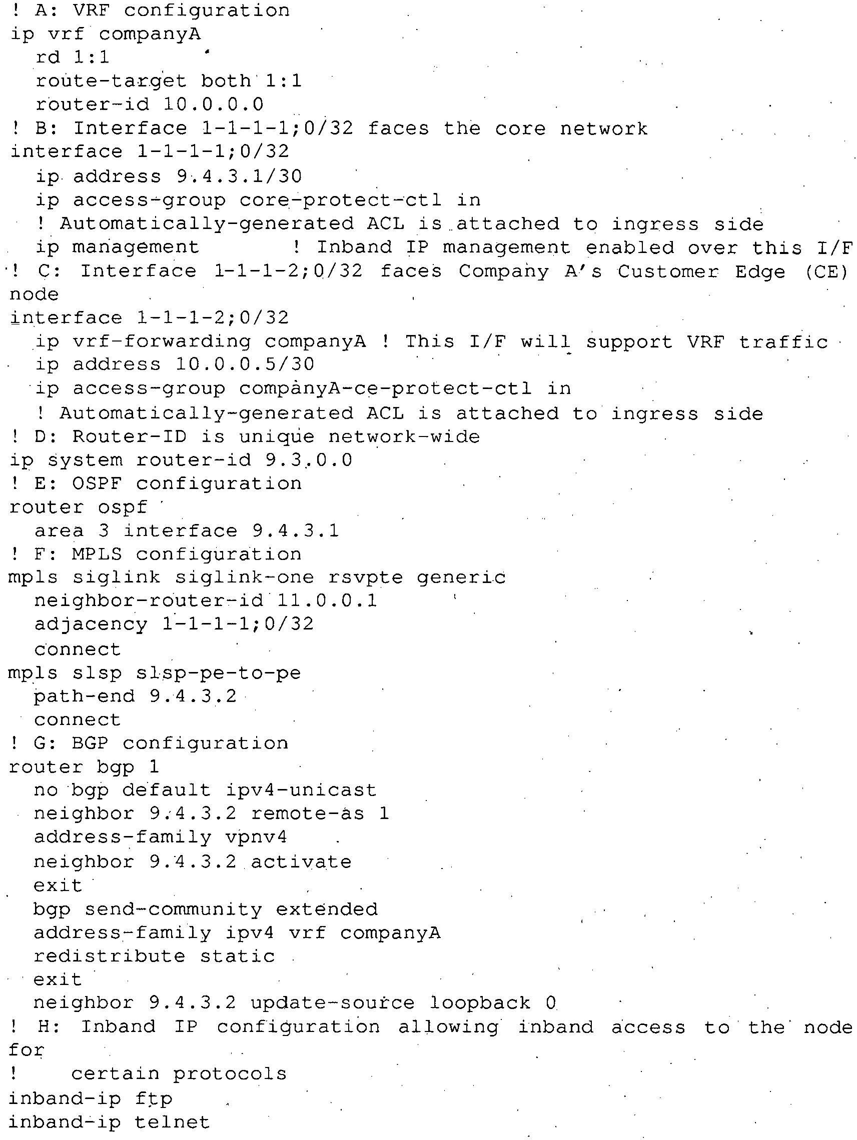 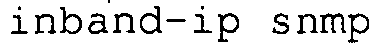 the following ACLs may be generated. One way of doing this is to access an interface configuration mode and type in a command such as "generate-access-list". An access list is then automatically generated and attached to that interface.

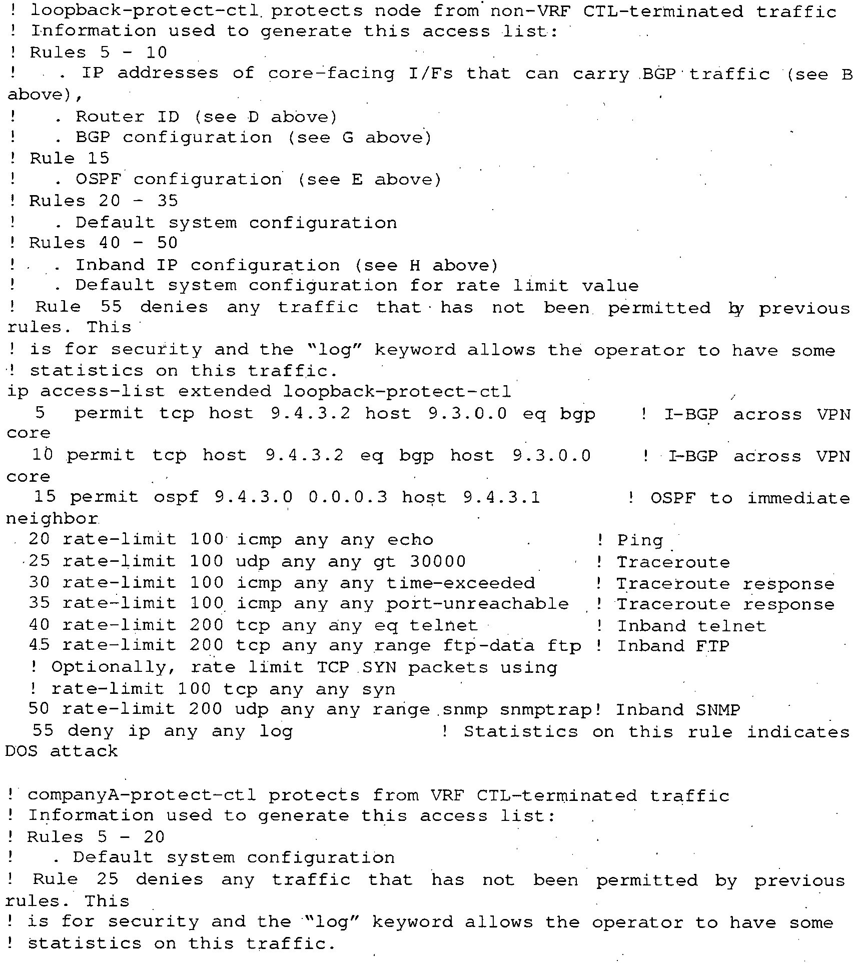

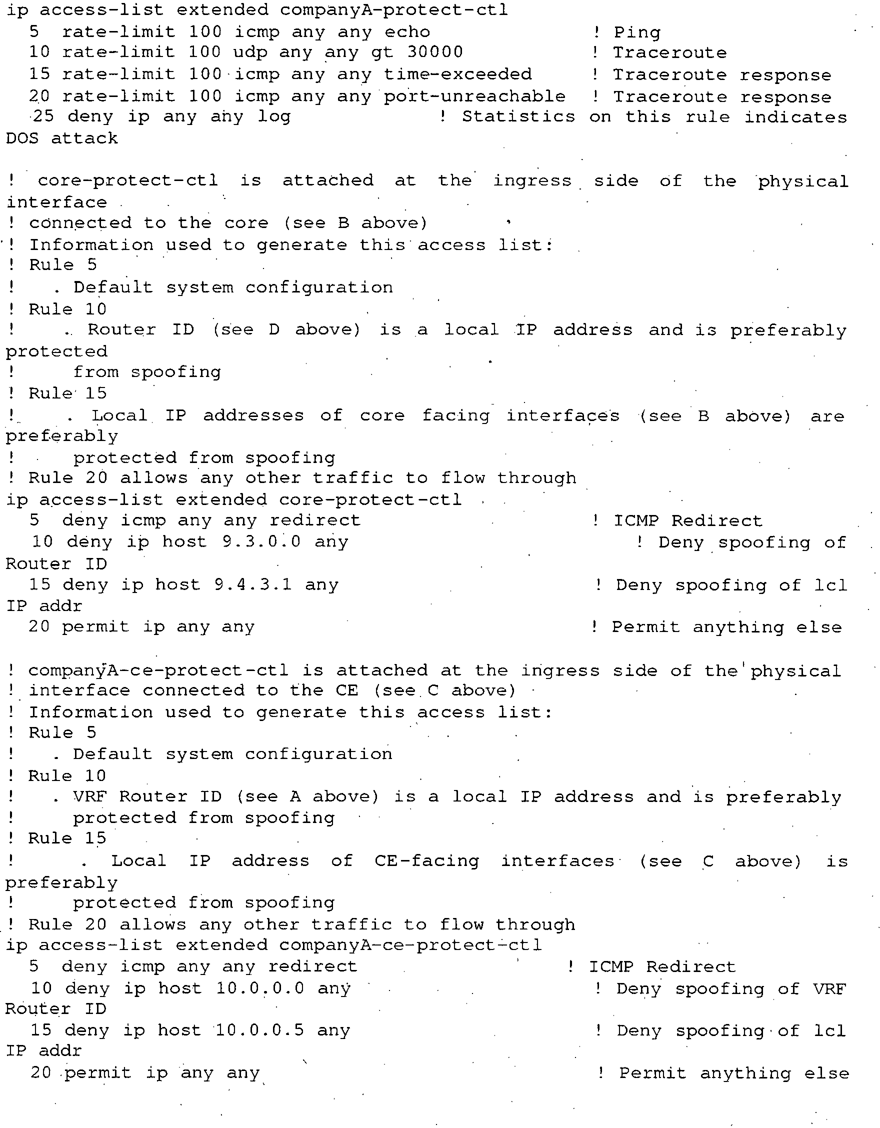

According to embodiments of the present invention, the above ACLs would be automatically generated from the configuration information, significantly reducing the time, effort, and likelihood of error in manually entering the ACLs.

Communication traffic control rule generation in accordance with aspects of the invention may have additional benefits in the form of lower operational costs. Automatically-generated communication traffic control rules may lower operational cost in running a communication system by reducing operator training requirements, for ACL creation for instance, and reducing operator effort spent on creating ACLs.

Embodiments of the invention may also improve security in that automatically generated ACLs will generally be substantially fault-free, more consistent, and have fewer security holes than manually entered ACLs. Automatically generated ACLs are also much more easily customized to communication equipment, illustratively each router in a service provider's communication network.

Furthermore, as configurations change, existing ACLs can be modified or new ACLs can be generated relatively easily in order to keep access control current, which maintains security at a high level.

What has been described is merely illustrative of the application of the principles of the invention. Other arrangements and methods can be implemented by those skilled in the art without departing from the scope of the present invention.

For example, it should be appreciated that the invention may be implemented in core network elements in a communication network, even though the network elements 42, 44 are shown in Fig. 4 as edge elements.

In addition, although described primarily in the context of methods and systems, other implementations of the invention are also contemplated, as instructions stored on a machine-readable medium, for example.

## Claims

1. A machine-implemented method of generating a communication traffic control rule for communication equipment, the method comprising:
accessing configuration information for communication equipment;
determining from the configuration information a parameter which affects processing of communication traffic by the communication equipment;
building, based on the parameter, a communication traffic control rule to be applied to communication traffic at the communication equipment; and
applying the communication traffic control rule at interfaces of the communication equipment to communication traffic being terminated by the communication equipment.

2. The method of claim 1, wherein determining comprises parsing a configuration file.

3. The method of claim 1, wherein determining comprises determining a plurality of parameters which affect processing of communication traffic by the communication equipment.

4. The method of claim 3, wherein building comprises building a plurality of communication traffic control rules, each communication traffic control rule being based on at least one of the plurality of parameters.

5. The method of claim 1, wherein the parameter comprises at least one of: a communication protocol enabled on the communication equipment, a communication function enabled on the communication equipment, and an address of a communication traffic source.

6. The method of claim 1, further comprising:
determining an additional communication traffic control parameter from default information stored for.the communication equipment,
wherein building comprises building the communication traffic control rule based on both the parameter and the additional parameter.

7. The method of claim 6, wherein the additional communication traffic, control parameter comprises at least one of: a communication traffic rate limiting condition, a service-specific parameter associated with a service supported by the communication equipment, a provider-specific parameter associated with a provider of a service supported by the communication equipment, an equipment-specific parameter associated with the communication equipment, and a parameter associated with a communication traffic control rule template..

8. The method of any one of claims 1 to 7, wherein the communication traffic control rule comprises at least one of: a blocking rule to block communication traffic, a permissive rule to pass communication traffic, a rate limiting rule to pass communication traffic up to a predetermined rate, and an Access Control List (ACL).

9. The method of any one of claims 1 to 8, further comprising:
detecting a change in the configuration information; and
repeating the operations of determining and building for at least configuration information affected by the detected change.

10. The method of claim 9, wherein repeating the operation of building comprises modifying a previously built communication traffic control rule.

11. A machine-readable medium storing instructions which when executed perform the method of any one of claims 1 to 10.

12. A system for generating a communication traffic control rule for communication equipment, the system comprising:
a parameter determination module configured to access configuration information for communication equipment and to determine from the configuration information a parameter which affects processing of communication traffic by the communication equipment; and
a rule builder configured to build, based on the parameter, a communication traffic control rule to be applied to communication traffic at the communication equipment.

13. The system of claim 12, wherein at least one of the parameter determination module and the rule builder is implemented in a processor.

14. The system of claim 12, wherein the parameter determination module comprises a configuration file parser configured to parse a configuration file.

15. The system of claim 12, wherein the parameter determination module is further configured to determine from the configuration information a plurality of parameters which affect processing of communication traffic by the communication equipment.

16. The system of claim 12, wherein the communication equipment comprises a plurality of interfaces, and wherein the rule builder is further configured to build any of a plurality of respective types of communication traffic control rule to be applied at the plurality of interfaces.

17. The system of claim 16, wherein the plurality of interfaces comprises any of: a communication interface to a communication medium, a secure interface to a plurality of communication interfaces, and a control interface.

18. The system of claim 17, wherein the plurality of types of communication traffic control rules comprises any of: a per interface Access Control List (ACL), a per Virtual Private Network (VPN) loopback ACL, and a control loopback ACL.

19. The system of claim 12, wherein the parameter determination module is configured to determine at least one parameter selected from the group consisting of: a communication protocol enabled on the communication equipment, a communication function enabled on the communication equipment, and an address of a communication traffic source.

20. The system of claim 12, wherein the parameter determination module is further configured to determine an additional communication traffic control parameter, and wherein the rule builder is further configured to build the communication traffic control rule based on both the parameter and the additional parameter.

21. The system of any one of claims 12 to 20, wherein the rule builder is configured to build at least one of: a blocking rule to block communication traffic, a permissive rule to pass communication traffic, and a rate limiting rule to pass communication traffic up to a predetermined rate.

22. The system of any one of claims 12 to 21, wherein the parameter determination module is further configured to detect a change in the configuration information and to determine a parameter which affects processing of communication traffic by the communication equipment from at least configuration information affected by the detected change, and wherein the rule builder is further configured to build a communication traffic control rule based on the parameter determined from at least the configuration information affected by the detected change.

23. Communication equipment comprising the system of any one of claims 12 to 22.

24. The communication equipment of claim 23, wherein the communication equipment comprises a network element of a communication network.

25. The communication equipment of claim 24, wherein the network element comprises a data packet router.

26. The communication equipment of any one of claims 23 to 25, further comprising:
a processor implementing at least one of the parameter determination module and the rule builder;
a memory for storing the configuration information; and
an interface for receiving the configuration information as user inputs.

27. The communication equipment of claim 26, wherein the interface receives the configuration information from a remote system.

28. A communication system comprising:
a network element;
a control system configured to control the network element and comprising the system of any one of claims 12 to 22,
wherein the control system is further configured to use the system of any one of claims 12 to 22 to build a communication traffic control rule to be applied at the network element.

29. A machine-implemented method of generating a communication traffic control rule for communication equipment, the method comprising:
accessing default information stored for communication equipment;
determining a default communication traffic control parameter from the stored default information; and
building, based on the default parameter, a communication traffic control rule to be applied to communication traffic at the communication equipment.

30. The method of claim 29, wherein determining comprises determining a plurality of default parameters from the stored default information.

31. The method of claim 30, wherein building comprises building a plurality of communication traffic control rules, each communication traffic control rule being based on at least one of the plurality of default parameters.

32. The method of claim 29, wherein the default parameter comprises at least one of: a communication traffic rate limiting condition, a service-specific parameter associated with a service supported by the communication equipment, a provider-specific parameter associated with a provider of a service supported by the communication equipment, an equipment-specific parameter associated with the communication equipment, and a parameter associated with a communication traffic control rule template.

33. The method of any one of claims 29 to 32, further comprising:
detecting a change in configuration information for the communication equipment;
determining from at least configuration information affected by the detected change a parameter which affects processing of communication traffic by the communication equipment; and
building, based on the determined parameter, a communication traffic control rule to be applied to communication traffic at the communication equipment.

34. The method of claim 33, wherein building a communication traffic control rule based on the determined parameter comprises modifying a communication traffic control rule which was previously built based on the default parameter.

35. A machine-readable medium storing instructions which when executed perform the method of any one of claims 29 to 34.

36. A system for generating a communication traffic control rule for communication equipment, the system comprising:
a parameter determination module configured to access default information stored for communication equipment and to determine a default communication traffic control parameter from the stored default information; and
a rule builder configured to build, based on the default parameter, a communication traffic control rule to be applied to communication traffic at the communication equipment.

37. The system of claim 36, wherein at least one of the parameter determination module and the rule builder is implemented in a processor.

38. The system of claim 36, wherein the parameter determination module is configured to determine at least one default parameter selected from the group consisting of: a communication traffic rate limiting condition, a service-specific parameter associated with a service supported by the communication equipment, a provider-specific parameter associated with a provider of a service supported by the communication equipment, an equipment-specific parameter associated with the communication equipment, and a parameter associated with a communication traffic control rule template.

39. The system of any one of claims 36 to 38, wherein the parameter determination module is further configured to detect a change in configuration information for the communication equipment and to determine from at least configuration information affected by the detected change a parameter which affects processing of communication traffic by the communication equipment, and wherein the rule builder is further configured to build, based on the determined parameter, a communication traffic control rule to be applied to communication traffic at the communication equipment.

40. The system of any one of claims 36 to 39, further comprising:
a memory for storing the default information.

41. The system of any one of claims 36 to 40, wherein the communication equipment comprises a plurality of interfaces, and wherein the rule builder is further configured to build any of a plurality of respective types of communication traffic control rule to be applied at the plurality of interfaces.

42. The system of claim 41, wherein the default parameter comprises a parameter specifying one of the plurality of types of communication traffic control rule.

43. Communication equipment comprising the system of any one of claims 36 to 42.

44. A communication system comprising:
a network element;
a control system configured to control the network element and comprising the system of any one of claims 36 to 42,
wherein the control system is further configured to use the system of any one of claims 36 to 42 to build a communication traffic control rule to be applied at the network element.

## Patentansprüche

1. Maschinen-implementiertes Verfahren zum Generieren einer Nachrichtenverkehrs-Steuerungsregel für eine Nachrichtenausrüstung, wobei das Verfahren umfasst:
Zugreifen auf Konfigurationsinformationen für die Nachrichtenausrüstung;
das Bestimmen eines Parameters auf der Grundlage der Konfigurationsinformationen, der sich auf die Verarbeitung des Nachrichtenverkehrs durch die Nachrichtenausrüstung auswirkt;
Bilden einer auf dem Parameter basierenden Nachrichtenverkehrs-Steuerungsregel, die an der Nachrichtenausrüstung auf den Nachrichtenverkehr anzuwenden ist; und
Anwenden der Nachrichtenverkehrs-Steuerungsregel auf Schnittstellen der Nachrichtenausrüstung, um den Nachrichtenverkehr durch die Nachrichtenausrüstung zu beenden.

2. Das Verfahren aus Anspruch 1, wobei das Bestimmen das Parsen einer Konfigurationsdatei umfasst.

3. Das Verfahren aus Anspruch 1, wobei das Bestimmen die Bestimmung einer Vielzahl von Parametern umfasst, die sich auf die Verarbeitung des Nachrichtenverkehrs durch die Nachrichtenausrüstung auswirken.

4. Das Verfahren aus Anspruch 3, wobei das Bilden die Bildung einer Vielzahl von Nachrichtenverkehrs-Steuerungsregeln umfasst, wobei jede Nachrichtenverkehrs-Steuerungsregel auf mindestens einem Parameter aus der Vielzahl von Parametern beruht.

5. Das Verfahren aus Anspruch 1, wobei der Parameter mindestens eines der folgenden Elemente umfasst: ein auf der Nachrichtenausrüstung aktiviertes Kommunikationsprotokoll, eine auf der Nachrichtenausrüstung aktivierte Kommunikationsfunktion und eine Adresse einer Nachrichtenverkehrsquelle.

6. Verfahren nach Anspruch 1, weiterhin umfassend:
Bestimmen eines zusätzlichen Nachrichtenverkehrs-Steuerungsparameters auf der Grundlage der voreingestellten, für die Nachrichtenausrüstung gespeicherten Informationen,
wobei das Bilden die Bildung der Nachrichtenverkehrs-Steuerungsregel auf der Grundlage von beiden, dem Parameter und dem zusätzlichen Parameter umfasst.

7. Das Verfahren aus Anspruch 6, wobei der zusätzliche Nachrichtenverkehrs-Steuerungsparameter mindestens eines der folgenden Elemente umfasst: eine Begrenzungsbedingung für die Nachrichtenverkehrsrate, einen servicespezifischen, einem von der Nachrichtenausrüstung unterstützten Service zugeordneten Parameter, einen providerspezifischen Parameter, der dem Provider eines Services zugeordnet ist, der von der Nachrichtenausrüstung unterstützt wird, und einen Parameter, der einer Vorlage für eine Nachrichtenverkehrs-Steuerungsregel zugeordnet ist.

8. Das Verfahren aus einem jeglichen der Ansprüche 1 bis 7, wobei die Nachrichtenverkehrs-Steuerungsregel mindestens eines der folgenden Elemente umfasst:
eine Blockierregel zum Blockieren von Nachrichtenverkehr, eine Zulassungsregel zur Weiterleitung von Nachrichtenverkehr, eine Regel zur Ratenbegrenzung für die Weiterleitung von Nachrichtenverkehr bis zu einer vorgegebenen Rate und eine Zugangskontrollliste (ACL).

9. Das Verfahren nach einem beliebigen der Ansprüche 1 bis 8, weiterhin umfassend:
das Feststellen einer Veränderung an den Konfigurierungsdaten; und
das Wiederholen der Vorgänge des Bestimmens und Bildens für zumindest die von der festgestellten Veränderung betroffenen Konfigurationsdaten.

10. Das Verfahren aus Anspruch 9, wobei das Wiederholen des Bildungsvorgangs die Veränderung einer zuvor gebildeten Nachrichtenverkehrs-Steuerungsregel umfasst.

11. Computerlesbares Medium zum Speichern von Instruktionen, welches bei der Ausführung das Verfahren nach einem beliebigen der Ansprüche 1 bis 10 durchführt.

12. System zum Generieren einer Nachrichtenverkehrs-Steuerungsregel für eine Nachrichtenausrüstung, wobei das System umfasst:
ein Parameter-Bestimmungsmodul, konfiguriert für den Zugriff auf Konfigurationsdaten für eine Nachrichtenausrüstung und dafür, um auf der Grundlage der Konfigurationsdaten einen Parameter zu bestimmen, der sich auf die Verarbeitung des Nachrichtenverkehrs durch die Nachrichtenausrüstung auswirkt; und
einen Regel-Builder, konfiguriert für das Bilden einer auf dem Parameter basierenden Nachrichtenverkehrs-Steuerungsregel, die an der Nachrichtenausrüstung auf den Nachrichtenverkehr anzuwenden ist.

13. Das System aus Anspruch 12, wobei mindestens entweder das Parameter-Bestimmungsmodul oder der Regel-Builder in den Prozessor implementiert ist.

14. Das System aus Anspruch 12, wobei das Parameter-Bestimmungsmodul einen Konfigurationsdateien-Parser umfasst, der für das Parsen einer Konfigurationsdatei konfiguriert ist.

15. Das System aus Anspruch 12, wobei das Parameter-Bestimmungsmodul weiterhin konfiguriert, um auf der Grundlage der Konfigurationsdaten eine Reihe von Parametern zu bestimmen, die sich auf die Verarbeitung des Nachrichtenverkehrs durch die Nachrichtenausrüstung auswirken.

16. Das System aus Anspruch 12, wobei die Nachrichtenausrüstung eine Vielzahl von Schnittstellen umfasst und wobei der Regel-Builder konfiguriert ist für die Bildung einer jeglichen aus einer Vielzahl respektiver Typen von Nachrichtenverkehrs-Steuerungsregeln, die auf die Vielzahl von Schnittstellen anzuwenden sind.

17. Das System aus Anspruch 16, wobei die Vielzahl von Schnittstellen ein beliebiges der folgenden Elemente umfasst: eine Kommunikationsschnittstelle zu einem Kommunikationsmedium, eine sichere Schnittstelle zu einer Vielzahl von Kommunikationsschnittstellen oder eine Steuerungsschnittstelle.

18. Das System aus Anspruch 17, wobei die Vielzahl von Typen von Nachrichtenverkehrs-Steuerungsregeln ein beliebiges der folgenden Elemente umfasst:
eine nach Schnittstellen konfigurierte Access Control List (ACL), eine nach virtuellen privaten Netzwerken (VPN) konfigurierte Loopback-ACL oder eine Steuerungs-Loopback-ACL.

19. Das System aus Anspruch 1, wobei das Parameter-Bestimmungsmodul konfiguriert ist für das Bestimmen von mindestens einem Parameter, der ausgewählt ist aus der folgende Elemente umfassenden Gruppe: ein auf der Nachrichtenausrüstung aktiviertes Kommunikationsprotokoll, eine auf der Nachrichtenausrüstung aktivierte Kommunikationsfunktion und eine Adresse einer Nachrichtenverkehrsquelle.

20. Das System aus Anspruch 12, wobei das Parameter-Bestimmungsmodul weiterhin konfiguriert ist für das Bestimmen eines zusätzlichen Nachrichtenverkehrs-Steuerungsparameters und wobei der Regel-Builder weiterhin konfiguriert ist für das Bilden einer Nachrichtenverkehrs-Steuerungsregel, die sowohl auf dem Parameter als auch auf dem zusätzlichen Parameter beruht.

21. Das System aus einem jeglichen der Ansprüche 12 bis 20, wobei der Regel-Builder konfiguriert ist für das Bilden mindestens einer der folgenden Regeln: eine Blockierregel zum Blockieren von Nachrichtenverkehr, eine Zulassungsregel zur Weiterleitung von Nachrichtenverkehr und eine Regel zur Ratenbegrenzung für die Weiterleitung von Nachrichtenverkehr bis zu einer vorgegebenen Rate.

22. Das System aus einem jeglichen der Ansprüche 12 bis 21, wobei das Parameter-Bestimmungsmodul weiterhin konfiguriert ist für das Erkennen einer Änderung an den Konfigurationsdaten und für das Bestimmen eines Parameters, der sich auf die Verarbeitung des Nachrichtenverkehrs durch die Nachrichtenausrüstung von zumindest den Konfigurationsdaten auswirkt, die von der festgestellten Änderung betroffen sind, wobei der Regel-Builder weiterhin konfiguriert ist für das Bilden einer Nachrichtenverkehrs-Steuerungsregel auf der Grundlage der Parameter, die festgelegt wurden auf der Grundlage zumindest der von der festgestellten Änderung betroffenen Kommunikationsdaten.

23. Nachrichtenausrüstung, das System nach einem beliebigen der Ansprüche 12 bis 22 umfassend.

24. Die Nachrichtenausrüstung aus Anspruch 23, wobei die Nachrichtenausrüstung ein Netzwerkelement eines Kommunikationsnetzwerks umfasst.

25. Die Nachrichtenausrüstung aus Anspruch 24, wobei das Netzwerkelement einen Datenpaketrouter umfasst.

26. Die Nachrichtenausrüstung nach einem beliebigen der Ansprüche 23 bis 25, weiterhin umfassend:
einen Prozessor, der mindestens entweder das Parameter-Bestimmungsmodul oder den Regel-Builder implementiert;
einen Datenspeicher für das Speichern der Konfigurationsdaten; und
eine Schnittstelle für den Empfang der Konfigurationsdaten als Benutzer-Input.

27. Die Nachrichtenausrüstung aus Anspruch 26, wobei die Schnittstelle die Konfigurationsdaten von einem entfernten System empfängt.

28. Ein Kommunikationssystem, umfassend:
ein Netzwerkelement;
ein Steuerungssystem, konfiguriert für die Steuerung des Netzwerkelements und das System aus einem beliebigen der Ansprüche 12 bis 22 umfassend,
wobei das Steuerungssystem weiterhin konfiguriert ist für die Verwendung des Systems aus einem beliebigen der Ansprüche 12 bis 22 für die Bildung einer auf das Netzwerkelement anzuwendenden Nachrichtenverkehrs-Steuerungsregel.

29. Maschinen-implementiertes Verfahren zum Generieren einer Nachrichtenverkehrs-Steuerungsregel für eine Nachrichtenausrüstung, wobei das Verfahren umfasst:
Zugreifen auf voreingestellte Informationen, die für die Nachrichtenausrüstung gespeichert sind;
Bestimmen eines voreingestellten Nachrichtenverkehrs-Steuerungsparameters aus der voreingestellten, gespeicherten Information; und
Bilden einer auf dem voreingestellten Parameter basierenden Nachrichtenverkehrs-Steuerungsregel, die an der Nachrichtenausrüstung auf den Nachrichtenverkehr anzuwenden ist.

30. Das Verfahren aus Anspruch 29, wobei das Bestimmen die Bestimmung einer Vielzahl voreingestellter Parameter in der gespeicherten, voreingestellten Information umfasst.

31. Das Verfahren aus Anspruch 30, wobei das Bilden die Bildung einer Vielzahl von Nachrichtenverkehrs-Steuerungsregeln umfasst, wobei jede Nachrichtenverkehrs-Steuerungsregel auf mindestens einem Parameter aus der Vielzahl voreingestellter Parameter beruht.

32. Das Verfahren aus Anspruch 29, wobei der voreingestellte Parameter mindestens eines der folgenden Elemente umfasst: eine Begrenzungsbedingung für die Nachrichtenverkehrsrate, einen servicespezifischen, einem von der Nachrichtenausrüstung unterstützten Service zugeordneten Parameter, einen providerspezifischen Parameter, der dem Provider eines Services zugeordnet ist, der von der Nachrichtenausrüstung unterstützt wird, und einen Parameter, der einer Vorlage für eine Nachrichtenverkehrs-Steuerungsregel zugeordnet ist.

33. Das Verfahren nach einem beliebigen der Ansprüche 29 bis 32, weiterhin umfassend:
Feststellen einer Änderung an den Konfigurationsdaten für die Nachrichtenausrüstung;
Das Bestimmen eins Parameters auf der Grundlage zumindest der von der festgestellten Änderung betroffenen Konfigurationsdaten, der sich auf die Verarbeitung des Nachrichtenverkehrs durch die Nachrichtenausrüstung auswirkt; und
Bilden einer auf dem bestimmten Parameter basierenden Nachrichtenverkehrs-Steuerungsregel, die an der Nachrichtenausrüstung auf den Nachrichtenverkehr anzuwenden ist.

34. Das Verfahren aus Anspruch 33, wobei die Bildung einer Nachrichtenverkehrs-Steuerungsregel auf der Grundlage der bestimmten Parameter das Modifizieren einer Nachrichtenverkehrs-Steuerungsregel umfasst, die zuvor auf der Grundlage des voreingestellten Parameters gebildet wurde.

35. Computerlesbares Medium zum Speichern von Instruktionen, welches bei der Ausführung das Verfahren nach einem beliebigen der Ansprüche 29 bis 34 durchführt.

36. System zum Generieren einer Nachrichtenverkehrs-Steuerungsregel für eine Nachrichtenausrüstung, wobei das System umfasst:
Parameter-Bestimmungsmodul, konfiguriert für den Zugriff auf voreingestellte, für die Nachrichtenausrüstung gespeicherte Informationen und für das Bestimmen eines voreingestellten Nachrichtenverkehrs-Steuerungsparameters aus der gespeicherten, voreingestellten Information; und
einen Regel-Builder, konfiguriert für das Bilden einer auf dem voreingestellten Parameter basierenden Nachrichtenverkehrs-Steuerungsregel, die an der Nachrichtenausrüstung auf den Nachrichtenverkehr anzuwenden ist.

37. Das System aus Anspruch 36, wobei mindestens entweder das Parameter-Bestimmungsmodul oder der Regel-Builder in den Prozessor implementiert ist.

38. Das System aus Anspruch 36, wobei das Parameter-Bestimmungsmodul konfiguriert ist für das Bestimmen von mindestens einem der voreingestellten Parameter aus einer Gruppe, die folgende Bedingungen und Parameter umfasst: eine Begrenzungsbedingung für die Nachrichtenverkehrsrate, einen servicespezifischen, einem von der Nachrichtenausrüstung unterstützten Service zugeordneten Parameter, einen providerspezifischen Parameter, der dem Provider eines Services zugeordnet ist, der von der Nachrichtenausrüstung unterstützt wird, und einen Parameter, der einer Vorlage für eine Nachrichtenverkehrs-Steuerungsregel zugeordnet ist.

39. Das System aus einem beliebigen der Ansprüche 36 bis 38, wobei das Parameter-Bestimmungsmodul weiterhin konfiguriert ist für das Feststellen einer Änderung an den Konfigurationsdaten für die Nachrichtenausrüstung und für das Bestimmen eins Parameters auf der Grundlage zumindest der von der festgestellten Änderung betroffenen Konfigurationsdaten, der sich auf die Verarbeitung des Nachrichtenverkehrs durch die Nachrichtenausrüstung auswirkt, wobei der Regel-Builder weiterhin konfiguriert ist für das Bilden einer auf dem bestimmten Parameter basierenden Nachrichtenverkehrs-Steuerungsregel, die an der Nachrichtenausrüstung auf den Nachrichtenverkehr anzuwenden ist.

40. Das System nach einem beliebigen der Ansprüche 36 bis 39, weiterhin umfassend:
einen Datenspeicher für das Speichern der voreingestellten Informationen.

41. Das System aus jedem beliebigen der Ansprüche 36 bis 40, wobei die Nachrichtenausrüstung eine Vielzahl von Schnittstellen umfasst und wobei der Regel-Builder konfiguriert ist für die Bildung einer jeglichen aus einer Vielzahl respektiver Typen von Nachrichtenverkehrs-Steuerungsregeln, die auf die Vielzahl von Schnittstellen anzuwenden sind.

42. Das System aus Anspruch 14, wobei der voreingestellte Parameter einen Parameter umfasst, der einen aus der Vielzahl von Typen von Nachrichtenverkehrs-Steuerungsregeln spezifiziert.

43. Nachrichtenausrüstung, das System nach einem beliebigen der Ansprüche 36 bis 42 umfassend.

44. Kommunikationssystem umfassend:
ein Netzwerkelement;
ein Steuerungssystem, konfiguriert für die Steuerung des Netzwerkelements und das System aus einem beliebigen der Ansprüche 36 bis 42 umfassend,
wobei das Steuerungssystem weiterhin konfiguriert ist für die Verwendung des Systems aus einem beliebigen der Ansprüche 36 bis 42 für die Bildung einer auf das Netzwerkelement anzuwendenden Nachrichtenverkehrs-Steuerungsregel.

## Revendications

1. Procédé mis en oeuvre par machine de génération d'une règle de contrôle de trafic de communication pour un équipement de communication, le procédé comprenant les étapes suivantes :
accéder à des informations de configuration pour l'équipement de communication ;
déterminer à partir des informations de configuration un paramètre qui affecte le traitement du trafic de communication par l'équipement de communication ;
élaborer, sur la base du paramètre, une règle de contrôle de trafic de communication à appliquer au trafic de communication sur l'équipement de communication ; et
appliquer la règle de contrôle de trafic de communication à des interfaces de l'équipement de communication au trafic de communication terminé par l'équipement de communication.

2. Procédé selon la revendication 1, dans lequel la détermination consiste à analyser un fichier de configuration.

3. Procédé selon la revendication 1, dans lequel la détermination consiste à déterminer une pluralité de paramètres qui affectent le traitement du trafic de communication par l'équipement de communication.

4. Procédé selon la revendication 3, dans lequel l'élaboration consiste à élaborer une pluralité de règles de contrôle de trafic de communication, chaque règle de contrôle de trafic de communication étant basée sur au moins un de la pluralité de paramètres.

5. Procédé selon la revendication 1, dans lequel le paramètre comprend au moins un élément parmi : un protocole de communication activé sur l'équipement de communication, une fonction de communication activée sur l'équipement de communication et une adresse d'une source de trafic de communication.

6. Procédé selon la revendication 1, comprenant en outre les étapes suivantes :
déterminer un paramètre supplémentaire de contrôle de trafic de communication à partir des informations par défaut stockées dans l'équipement de communication,
dans lequel l'élaboration consiste à élaborer la règle de contrôle de trafic de communication sur la base à la fois du paramètre et du paramètre supplémentaire.

7. Procédé selon la revendication 6, dans lequel le paramètre supplémentaire de contrôle de trafic de communication comprend au moins un élément parmi : une condition de limite de débit de trafic de communication, un paramètre spécifique au service associé à un service pris en charge par l'équipement de communication, un paramètre spécifique au fournisseur associé à un fournisseur d'un service pris en charge par l'équipement de communication, un paramètre spécifique à l'équipement associé à l'équipement de communication, et un paramètre associé au modèle de règle de contrôle de trafic de communication.

8. Procédé selon l'une quelconque des revendications 1 à 7, dans lequel la règle de contrôle de trafic de communication comprend au moins un élément parmi : une règle de blocage pour bloquer le trafic de communication, une règle d'autorisation pour laisser passer le trafic de communication, une règle de limitation de débit pour laisser passer le trafic de communication jusqu'à un débit prédéterminé, et une liste de contrôle d'accès (ACL).

9. Procédé selon l'une quelconque des revendications 1 à 8, comprenant en outre les étapes suivantes :
détecter un changement dans les informations de configuration ; et
répéter les opérations de détermination et d'élaboration pour au moins les informations de configuration affectées par le changement détecté.

10. Procédé selon la revendication 9, dans lequel la répétition des opérations d'élaboration consiste à modifier une règle de contrôle de trafic de communication élaborée précédemment.

11. Support lisible par machine stockant des instructions qui, lorsqu'elles sont exécutées, exécutent le procédé selon l'une quelconque des revendications 1 à 10.

12. Système de génération d'une règle de contrôle de trafic de communication pour un équipement de communication, le système comprenant :
un module de détermination de paramètre configuré pour accéder à des informations de configuration pour l'équipement de communication et pour déterminer à partir des informations de configuration un paramètre qui affecte le traitement du trafic de communication par l'équipement de communication ;
un dispositif d'élaboration de règles configuré pour élaborer, sur la base du paramètre, une règle de contrôle de trafic de communication à appliquer au trafic de communication sur l'équipement de communication.

13. Système selon la revendication 12, dans lequel au moins l'un du module de détermination de paramètre et du dispositif d'élaboration de règles est mis en oeuvre dans un processeur.

14. Système selon la revendication 12, dans lequel le module de détermination de paramètre comprend un analyseur de fichier de configuration configuré pour analyser un fichier de configuration.

15. Système selon la revendication 12, dans lequel le module de détermination de paramètre est en outre configuré pour déterminer à partir des informations de configuration une pluralité de paramètres qui affectent le traitement du trafic de communication par l'équipement de communication.

16. Système selon la revendication 12, dans lequel l'équipement de communication comprend une pluralité d'interfaces, et dans lequel le dispositif d'élaboration de règles est en outre configuré pour élaborer l'une quelconque d'une pluralité de types respectifs de règles de contrôle de trafic de communication à appliquer à la pluralité d'interfaces.

17. Système selon la revendication 16, dans lequel la pluralité d'interfaces comprend un élément quelconque parmi : une interface de communication avec un support de communication, une interface sécurisée avec une pluralité d'interfaces de communication et une interface de commande.

18. Système selon la revendication 17, dans lequel la pluralité de types de règles de contrôle de trafic de communication comprend un élément quelconque parmi : une liste de contrôle d'accès (ACL) par interface, une ACL de boucle de retour par réseau privé virtuel (VPN), et une ACL de boucle de retour de commande.

19. Système selon la revendication 12, dans lequel le module de détermination de paramètre est configuré pour déterminer au moins un paramètre sélectionné parmi le groupe constitué de : un protocole de communication activé sur l'équipement de communication, une fonction de communication activée sur l'équipement de communication et une adresse d'une source de trafic de communication.

20. Système selon la revendication 12, dans lequel le module de détermination de paramètre est configuré pour déterminer un paramètre supplémentaire de contrôle de trafic de communication, et dans lequel le dispositif d'élaboration de règles est en outre configuré pour élaborer la règle de contrôle de trafic de communication sur la base du paramètre et du paramètre supplémentaire.

21. Système selon l'une quelconque des revendications 12 à 20, dans lequel le dispositif d'élaboration de règles est configuré pour élaborer au moins un élément parmi :
une règle de blocage pour bloquer le trafic de communication, une règle d'autorisation pour laisser passer le trafic de communication, une règle de limitation de débit pour laisser passer le trafic de communication jusqu'à un débit prédéterminé.

22. Système selon l'une quelconque des revendications 12 à 20, dans lequel le module de détermination de paramètre est configuré pour détecter un changement dans les informations de configuration et pour déterminer un paramètre qui affecte le traitement du trafic de communication par l'équipement de communication à partir d'au moins les informations de configuration affectées par le changement détecté, et dans lequel le dispositif d'élaboration de règles est en outre configuré pour élaborer une règle de contrôle de trafic de communication sur la base du paramètre déterminé à partir au moins des informations de configuration affectées par le changement détecté.

23. Équipement de communication comprenant le système selon l'une quelconque des revendications 12 à 22.

24. Équipement de communication selon la revendication 23, dans lequel l'équipement de communication comprend un élément de réseau d'un réseau de communication.

25. Équipement de communication selon la revendication 24, dans lequel l'élément de réseau comprend un routeur de paquets de données.

26. Équipement de communication selon l'une quelconque des revendications 23 à 25, comprenant en outre :
un processeur mettant en oeuvre au moins l'un du module de détermination de paramètre et du dispositif d'élaboration de règles ;
une mémoire destinée à stocker les informations de configuration ; et
une interface destinée à recevoir les informations de configuration en tant qu'entrées d'utilisateur.

27. Équipement de communication selon la revendication 26, dans lequel l'interface reçoit les informations de configuration depuis un système distant.

28. Système de communication, comprenant :
un élément de réseau ;
un système de commande configuré pour commander l'élément de réseau et comprenant le système selon l'une quelconque des revendications 12 à 22,
dans lequel le système de commande est en outre configuré pour utiliser le système selon l'une quelconque des revendications 12 à 22 pour élaborer une règle de contrôle de trafic de communication à appliquer à l'élément de réseau.

29. Procédé mis en oeuvre par machine de génération d'une règle de contrôle de trafic de communication pour un équipement de communication, le procédé comprenant les étapes suivantes :
accéder à des informations par défaut stockées pour l'équipement de communication ;
déterminer un paramètre de contrôle de trafic de communication par défaut à partir des informations par défaut stockées ; et
élaborer, sur la base du paramètre par défaut, une règle de contrôle de trafic de communication à appliquer au trafic de communication sur l'équipement de communication.

30. Procédé selon la revendication 29, dans lequel la détermination consiste à déterminer une pluralité de paramètres par défaut à partir des informations par défaut stockées.

31. Procédé selon la revendication 30, dans lequel l'élaboration consiste à élaborer une pluralité de règles de contrôle de trafic de communication, chaque règle de contrôle de trafic de communication étant basée sur au moins un de la pluralité de paramètres par défaut.

32. Procédé selon la revendication 29, dans lequel le paramètre par défaut comprend au moins un élément parmi : une condition de limite de débit de trafic de communication, un paramètre spécifique au service associé à un service pris en charge par l'équipement de communication, un paramètre spécifique au fournisseur associé à un fournisseur d'un service pris en charge par l'équipement de communication, un paramètre spécifique à l'équipement associé à l'équipement de communication, et un paramètre associé à un modèle de règle de contrôle de trafic de communication.

33. Procédé selon l'une quelconque des revendications 29 à 32, comprenant en outre les étapes suivantes :
détecter un changement dans les informations de configuration pour l'équipement de communication ;
déterminer à partir au moins des informations de configuration affectées par le changement détecté un paramètre qui affecte le traitement du trafic de communication par l'équipement de communication ; et
élaborer, sur la base du paramètre déterminé, une règle de contrôle de trafic de communication à appliquer au trafic de communication sur l'équipement de communication.

34. Procédé selon la revendication 33, dans lequel l'élaboration d'une règle de contrôle de trafic de communication sur la base du paramètre déterminé consiste à modifier une règle de contrôle de trafic de communication qui a été précédemment élaborée sur la base du paramètre par défaut.

35. Support lisible par machine stockant des instructions qui, lorsqu'elles sont exécutées, exécutent le procédé selon l'une quelconque des revendications 29 à 34.

36. Système de génération d'une règle de contrôle de trafic de communication pour un équipement de communication, le système comprenant :
un module de détermination de paramètre configuré pour accéder à des informations par défaut stockées pour l'équipement de communication et pour déterminer un paramètre par défaut de contrôle de trafic de communication à partir des informations par défaut stockées ; et
un dispositif d'élaboration de règles configuré pour élaborer, sur la base du paramètre par défaut, une règle de contrôle de trafic de communication à appliquer au trafic de communication sur l'équipement de communication.

37. Système selon la revendication 36, dans lequel au moins l'un du module de détermination de paramètre et du dispositif d'élaboration de règles est mis en oeuvre dans un processeur.

38. Système selon la revendication 36, dans lequel le module de détermination de paramètre est configuré pour déterminer au moins un paramètre par défaut sélectionné parmi le groupe comprenant : une condition de limite de débit de trafic de communication, un paramètre spécifique au service associé à un service pris en charge par l'équipement de communication, un paramètre spécifique au fournisseur associé à un fournisseur d'un service pris en charge par l'équipement de communication, un paramètre spécifique à l'équipement associé à l'équipement de communication, et un paramètre associé à un modèle de règle de contrôle de trafic de communication.

39. Système selon l'une quelconque des revendications 36 à 38, dans lequel le module de détermination de paramètre est configuré pour détecter un changement dans les informations de configuration pour l'équipement de communication et pour déterminer à partir d'au moins les informations de configuration affectées par le changement détecté un paramètre qui affecte le traitement du trafic de communication par l'équipement de communication, et dans lequel le dispositif d'élaboration de règles est en outre configuré pour élaborer, sur la base du paramètre déterminé, une règle de contrôle de trafic de communication à appliquer au trafic de communication sur l'équipement de communication.

40. Système selon l'une quelconque des revendications 36 à 39, comprenant en outre :
une mémoire pour stocker les informations par défaut.

41. Système selon l'une quelconque des revendications 36 à 40, dans lequel l'équipement de communication comprend une pluralité d'interfaces, et dans lequel le dispositif d'élaboration de règles est en outre configuré pour élaborer l'un quelconque d'une pluralité de types respectifs de règles de contrôle de trafic de communication à appliquer à la pluralité d'interfaces.

42. Système selon la revendication 41, dans lequel le paramètre par défaut comprend un paramètre spécifiant l'un de la pluralité de types de règles de contrôle de trafic de communication.

43. Équipement de communication comprenant le système selon l'une quelconque des revendications 36 à 42.

44. Système de communication, comprenant :
un élément de réseau ;
un système de commande configuré pour commander l'élément de réseau et comprenant le système selon l'une quelconque des revendications 36 à 42,
dans lequel le système de commande est en outre configuré pour utiliser le système selon l'une quelconque des revendications 36 à 42 pour élaborer une règle de contrôle de trafic de communication à appliquer à l'élément de réseau.
